# EUROPÄISCHE PATENTANMELDUNG

(11) **EP 1 345 057 A2**
(43) Veröffentlichungstag der Anmeldung: **17.09.2003**
(21) Anmeldenummer: 03290399.9
(22) Anmeldetag: 18.02.2003
(51) Int. Cl.: G02B 6/44

(54) **Verfahren zur Herstellung eines optischen Kabels**

(30) Priorität: 16.03.2002 DE 10211793
(71) Anmelder: Nexans, 75008 Paris (FR)
(72) Erfinder: Frohne, Christian,Dr., 30657 Hannover (DE); Kleemann ,Bernd, 30926 Seelze (DE); Porcher, Klaus, 31275 Lehrte (DE); Toften, Tom Eirik, 8200 Fanske (NO)
(74) Vertreter: Döring, Roger, Dipl.-Ing.

(57) **Zusammenfassung**

Es wird ein Verfahren zur Herstellung eines optischen Kabels, mit einem Metallrohr und zumindest einem im Metallrohr angeordneten Lichtwellenleiter beschrieben, bei welchem ein von einer Vorratsspule abgezogenes Metallband allmählich zu einem Schlitzrohr geformt wird, in das noch offene Schlitzrohr der oder die Lichtwellenleiter eingeführt werden, der Längsschlitz des Schlitzrohres verschweißt, das geschweißte Rohr in seinem Durchmesser reduziert wird, das geschweißte Rohr nach dem Reduziervorgang von einer Abzugsvorrichtung gefaßt und in Fertigungsrichtung transportiert wird, und mit zumindest einer Windung auf eine Abzugsscheibe aufgewickelt wird. Zwischen der
Abzugsvorrichtung (10) und der Abzugsscheibe (11) wird von der Abzugsscheibe (11) eine eine elastische Dehnung des Metallrohres (13) in Fertigungsrichtung bewirkende Kraft aufgebracht und das Maß der elastischen Dehnung durch die Kraft geregelt.

## Beschreibung

Die Erfindung betrifft ein Verfahren zur Herstellung eines optischen Kabels mit einem Metallrohr und zumindest einem im Metallrohr angeordneten Lichtwellenleiter nach dem Oberbegriff des Anspruchs 1 sowie eine Vorrichtung zur Herstellung eines optischen Kabels nach dem Oberbegriff des Anspruchs 5.

Aus der EP 0 703 478 A ist ein Verfahren zur Herstellung eines optischen Kabels, bestehend aus einem Metallrohr, in welchem zumindest ein Lichtwellenleiter angeordnet ist, bekannt. Bei diesem Verfahren wird ein Metallband von einer Vorratsspule abgezogen und mittels einer Bandformeinrichtung kontinuierlich zu einem Schlitzrohr geformt. In das noch offene Schlitzrohr wird zumindest ein Lichtwellenleiter eingeführt und der Längsschlitz des Metallrohres durch eine Schweißnaht geschlossen. Das geschweißte Rohr wird dann in seinem Durchmesser reduziert, wobei die für die Rohrredizierung erforderliche Kraft durch eine hinter der Rohrreduziervorrichtung befindliche Abzugsvorrichtung aufgebracht wird. In Fertigungsrichtung gesehen hinter der Abzugsvorrichtung wird das Metallrohr mit den in ihm befindlichen Lichtwellenleiter(n) mit zumindest einer Windung auf eine Abzugsscheibe gewickelt und anschließend auf eine Vorratsspule aufgewickelt.

Die bei Lichtwellenleiterkabeln erforderliche Überlänge der Lichtwellenleiter wird bei dem bekannten Verfahren dadurch erzeugt, daß zwischen der Abzugsvorrichtung und Abzugsscheibe eine senkrecht zur Fertigungsrichtung auf das Metallrohr einwirkende Kraft vorgesehen ist, die das Metallrohr elastisch verformt. Die Kraft wird durch ein Gewicht aufgebracht, welches mittels einer Rolle an dem Metallrohr hängt und dieses auslenkt. Die aufgrund des Gewichtes zwischen der Abzugsvorrichtung und der Abzugsscheibe auftretende elastische Dehnung des Metallrohres wird auf der Anzugsscheibe aufgehoben und bewirkt somit die gewünschte Überlange.

Bei diesem bekannten Verfahren hat es sich als nachteilig herausgestellt, daß zum einen die an dem Metallrohr angreifende Kraft nicht regelbar ist und somit eine Anpassung der Überlänge bei sich ändernden Materialeigenschaften nicht möglich ist, zum anderen durch die Auslenkung des Metallrohres diesem eine korkenzieherartige Spannung einverleibt wird, die sich für eine Weiterverarbeitung des optischen Kabels nachteilig auswirkt.

Ausgehend von dem bekannten Verfahren nach der EP 0 703 478 liegt der Erfindung von daher die Aufgabe zugrunde, ein Verfahren anzugeben, mit welchem die Überlange der Lichtwellenleiter gegenüber dem Metallrohr exakt eingestellt werden kann und bei dem der genannte Korkenziehereffekt nicht auftritt.

Diese Aufgabe wird durch die im Kennzeichen der Ansprüche 1 und 6 erfaßten Merkmale gelöst.

Weitere vorteilhafte Ausgestaltungen der Erfindung sind in den Unteransprüchen erfaßt.

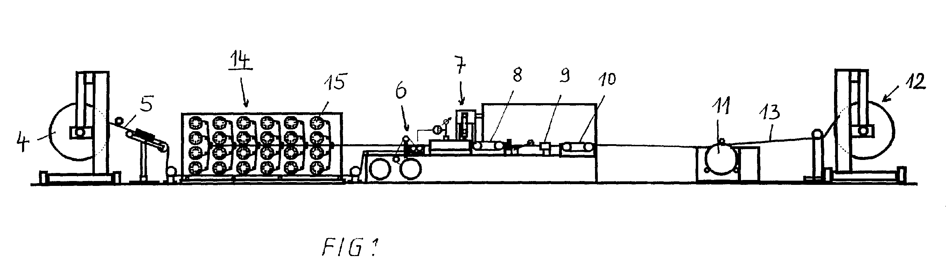

Die Erfindung ist anhand der in den Figuren 1 bis 3 schematisch dargestellten Ausführungsbeispiele näher erläutert.

Die Figur 1 zeigt eine seitliche Ansicht der erfindungsgemäßen Vorrichtung.

Von einer Vorratsspule 4 wird ein Band 5 kontinuierlich abgezogen und einer Formvorrichtung 6 zugeführt, in der das Band 5 zu einem Rohr mit Längsschlitz geformt wird. Teil dieser Formvorrichtung 6 ist eine nicht näher bezeichnete Besäumeinrichtung, in welcher das Band 5 exakt auf die benötigte Breite geschnitten wird. Die Formeinrichtung 6 besteht weiterhin aus mehreren nicht näher bezeichneten Formrollensätzen. Der Längsschlitz des geformten Rohres wird mittels einer Laserschweißeinrichtung 7 geschlossen. Für die exakte Führung des geschlitzten Rohres unterhalb der Schweißeinrichtung 7 sorgt ein erster Spannbackenabzug 8, der aus einer Vielzahl das Rohr umfassenden Spannbackenpaaren besteht, die über eine endlose Kette angetrieben sind. Hinter dem ersten Spannbackenabzug 8 ist eine Rohrreduziereinrichtung 9, z. B. eine Ziehmatrize angeordnet, in welcher der Durchmesser des Rohres verringert wird. Ein zweiter Spannbackenabzug 10 ist hinter der Rohrreduziereinrichtung 9 angeordnet, der an dem gezogenen Rohr angreift und dieses durch die Ziehmatrize zieht. Hinter dem zweiten Spannbackenabzug 10 befindet sich noch ein nicht dargestellter Ziehstein sowie eine angetriebene Abzugsscheibe 11, auf deren Umfangsflöche das Rohr mit mehreren Windungen aufliegt. Die Abzugsscheibe 11 ist mit einer Abzugsgeschwindigkeit angetrieben, welche gegenüber der Abzugsgeschwindigkeit des zweiten Spannbackenabzugs 10 regelbar ist. Hinter der Abzugsscheibe 1 1 ist ein Aufwickler 12 vorgesehen, der das Rohr 13 mit leichtem Zug aufwickelt.

Mit 14 ist eine Ablaufvorrichtung für eine Vielzahl von nicht näher bezeichneten Lichtwellenleitern bezeichnet, die mit einer Vielzahl von Spulen 15 bestückt ist, auf welche die Lichtwellenleiter aufgewickelt sind.

Die Lichtwellenleiter werden von den Spulen 15 abgezogen und in das noch offene Rohr vor der Schweißeinrichtung eingeführt. Als Schutz für die empfindlichen Lichtwellenleiter ragt ein nicht dargestelltes ortsfestes Metallröhrchen in das Schlitzrohr, durch dessen Inneres die Lichtwellenleiter hindurchgeleitet werden. Das Metallröhrchen gibt die Lichtwellenleiter frühestens hinter der Schweißeinrichtung 7 frei. Das Metallröhrchen ist in konzentrischer Anordnung von einem weiteren Metallröhrchen umgeben. Durch den von den beiden konzentrischen Metallröhrchen gebildeten Ringspalt wird unter Druck ein Petroleumjelly in das Rohr eingefüllt.

Damit die Lichtwellenleiter in dem Metallrohr mit einer Überlänge vorliegen, wird das Metallrohr kontinuierlich zwischen dem zweiten Spannbackenabzug 10, dessen Spannbackenpaare das Metallrohr fest umgreifen und die durch die Rohrreduzierung entstehenden Verformungskräfte aufbringen, und der Abzugsscheibe 11 elastisch verformt, d. h. gedehnt. Dadurch wird auf die Abzugsscheibe 11 eine gleichgroße Länge von gedehntem Metallrohr und Lichtwellenleiter aufgewickelt. Auf der Abzugsscheibe 11 "entspannt" sich der Zustand der elastischen Verformung, das Metallrohr verkürzt sich auf den normalen Zustand.

Die elastische Verformung wird dadurch bewirkt, daß die Abzugsscheibe 11 eine Kraft auf das Metallrohr zwischen dem Spannbackenabzug 10 und der Abzugsscheibe 11 in Fertigungsrichtung ausübt. Damit die Kraft stets konstant bleibt und somit eine konstante Überlänge der Lichtwellenleiter in dem Metallrohr erzeugt, wird die Kraft gemessen und als Bestimmungsgröße in einem Regelkreis eingegeben, welcher die Umdrehungsgeschwindigkeit der Abzugsscheibe regelt.

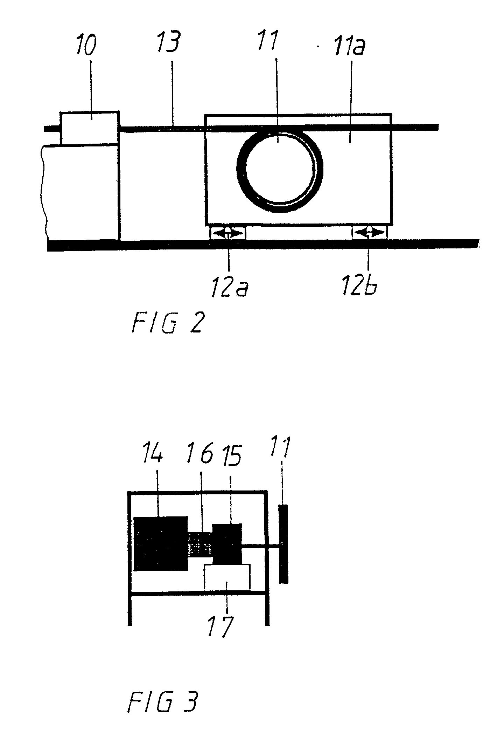

In den Figuren 2 und 3 sind zwei besonders einfache Möglichkeiten der Kraftmessung dargestellt.

In der Figur 2 ist das Gehäuse bzw. der Rahmen 11a der Abzugsscheibe 11 auf zwei Kraftmeßsensoren 12a und 12b gelagert.

In der Figur 3 ist die Abzugsscheibe 11 mit ihrem Antriebsmotor 14 sowie einem Lagerbock 15 in Fertigungsrichtung gesehen schematisch dargestellt.

Eine erste Möglichkeit der Kraftmessung besteht darin, daß der Lagerbock 15 auf einem oder mehreren Kraftmeßsensoren 17 gelagert ist. Wenn der Lagerbock 15 fehlt, kann der Antriebsmotor 14 in nicht dargestellter Weise auf Kraftmeßsensoren gelagert sein.

Bei der zweiten Meßmethode wird zwischen den Antriebsmotor 14 und der Abzugsscheibe 11 ein nicht näher bezeichneter Torsionssensor auf der Antriebsmotor 14 und Abzugsscheibe 11 verbindenden Welle 16 angeordnet.

## Patentansprüche

1. Verfahren zur Herstellung eines optischen Kabels, mit einem Metallrohr und zumindest einem im Metallrohr angeordneten Lichtwellenleiter, bei welchem ein von einer Vorratsspule abgezogenes Metallband allmählich zu einem Schlitzrohr geformt wird, in das noch offene Schlitzrohr der oder die Lichtwellenleiter eingeführt werden, der Längsschlitz des Schlitzrohres verschweißt, das geschweißte Rohr in seinem Durchmesser reduziert wird, das geschweißte Rohr nach dem Reduziervorgang von einer Abzugsvorrichtung gefaßt und in Fertigungsrichtung transportiert wird, und mit zumindest einer Windung auf eine Abzugsscheibe aufgewickelt wird, **dadurch gekennzeichnet, daß** zwischen der Abzugsvorrichtung (10) und der Abzugsscheibe (11) von der Abzugsscheibe (11) eine eine elastische Dehnung des Metallrohres (13) in Fertigungsrichtung bewirkende Kraft aufgebracht wird und daß das Maß der elastischen Dehnung durch die Kraft geregelt wird.

2. Verfahren nach Anspruch 1, **dadurch gekennzeichnet, daß** die von der Abzugsscheibe (11) erzeugte Kraft mittels eines oder mehrerer Kraftmeßsensoren (12a, 12b, 17) gemessen wird.

3. Verfahren nach Anspruch 1, **dadurch gekennzeichnet, daß** das Drehmoment des Antriebs für die Abzugsscheibe (11) z. B. durch einen Torsionssensor gemessen wird.

4. Verfahren nach Anspruch 1, **dadurch Bgekennzeichnet,** daß die auf die Abzugsscheibe (11) bzw. das Gehäuse/Rahmen der Abzugsscheibe (11) einwirkende Kraft gemessen wird.

5. Vorrichtung zur Herstellung eines optischen Kabels, mit einem Metallrohr und zumindest einem in dem Metallrohr angeordneten Lichtwellenleiter, bestehend aus einer ein Metallband kontinuierlich zu einem Rohr formenden Einrichtung, einer den Längsschlitz des Rohres schließenden Schweißeinrichtung einer hinter der Schweißeinrichtung befindlichen Rohrreduziereinrichtung, einer das geschweißte und im Durchmesser reduzierte Rohr greifenden Abzugsvorrichtung sowie einer Abzugsscheibe, **dadurch gekennzeichnet, daß** die Abzugsscheibe (11) auf Kraftmeßsensoren (12a,12b) gelagert ist, wobei die von den Kraftmeßsensoren (12a, 12b) ermittelten Werte die Regelgröße für den Antrieb der Abzugsscheibe (11) sind.

6. Vorrichtung zur Herstellung eines optischen Kabels, mit einem Metallrohr und zumindest einem in dem Metallrohr angeordneten Lichtwellenleiter, bestehend aus einer ein Metallband kontinuierlich zu einem Rohr formenden Einrichtung, einer den Längsschlitz des Rohres schließenden Schweißeinrichtung einer hinter der Schweißeinrichtung befindlichen Rohrreduziereinrichtung, einer das geschweißte und im Durchmesser reduzierte Rohr greifenden Abzugsvorrichtung sowie einer Abzugsscheibe, mit einem Antriebsmotor für die Abzugsscheibe, **dadurch gekennzeichnet, daß** der an den Antriebsmotor (14) und die Abzugsscheibe (11) verbindenden Welle ein Drehmomentensensor angeordnet ist.

7. Vorrichtung zur Herstellung eines optischen Kabels, mit einem Metallrohr und zumindest einem in dem Metallrohr angeordneten Lichtwellenleiter, bestehend aus einer ein Metallband kontinuierlich zu einem Rohr formenden Einrichtung, einer den Längsschlitz des Rohres schließenden Schweißeinrichtung einer hinter der Schweißeinrichtung befindlichen Rohrreduziereinrichtung, einer das geschweißte und im Durchmesser reduzierte Rohr greifenden Abzugsvorrichtung sowie einer Abzugsscheibe, mit einem Antriebsmotor für die Abzugsscheibe, **dadurch gekennzeichnet, daß** der Antriebsmotor (14) und/oder ein zwischen Antriebsmotor (14) und Abzugsscheibe (11) vorgesehener Lagerbock (15) auf Kraftmeßsensoren (17) gelagert sind.
